# EUROPÄISCHE PATENTSCHRIFT

(11) **EP 4 449 955 B1**
(45) Veröffentlichungstag und Bekanntmachung des Hinweises auf die Patenterteilung: **25.03.2026**
(21) Anmeldenummer: 24170924.5
(22) Anmeldetag: 18.04.2024
(51) Int. Cl.: A47J 31/00, A47J 31/057, A47J 31/06

(54) **ZUBEREITUNGSVORRICHTUNG FÜR DIE ZUBEREITUNG EINES GETRÄNKS**
PREPARATION DEVICE FOR THE PREPARATION OF A BEVERAGE
DISPOSITIF DE PRÉPARATION POUR LA PRÉPARATION D'UNE BOISSON

(30) Priorität: 19.04.2023 EP 23168797
(43) Veröffentlichungstag der Anmeldung: 23.10.2024
(73) Patentinhaber: LRP AG, 3600 Thun (CH)
(72) Erfinder: Widmer, Markus, 3600 Thun (CH)
(74) Vertreter: Herrmann, Johanna

(56) Entgegenhaltungen:
- US-A- 5 901 634
- US-A1- 2016 015 205
- US-A1- 2022 183 498
- US-A1- 2023 034 000

## Beschreibung

### Hintergrund

Die vorliegende Erfindung betrifft eine Zubereitungsvorrichtung für die Zubereitung eines Getränks, insbesondere für die Zubereitung eines Heissgetränks, beispielsweise für ein Kaffeegetränk.

### Stand der Technik

Mittels Mengenbrühern werden für gastronomische Anwendungen grössere Mengen Filterkaffee in der Regel von 1 bis 8 Litern auf einmal gebrüht und in ein Thermosgefäss geführt. Das Thermosgefäss ist mit einer Dosiervorrichtung ausgestattet, um das Kaffeegetränk in Portionen abgefüllt werden kann. Mengenbrüher unterscheiden sich in ihrer Funktion grundlegend von Kapselkaffeemaschinen, wie beispielsweise in Fig. 37 oder Fig. 45 des Dokuments US 2016/015205 A1 gezeigt, die zur Zubereitung von einzelnen Portionen eines Kaffeegetränks in einer Tasse ausgelegt sind. In der Kapselkaffeemaschine wird somit bei jedem Brauvorgang nur jeweils eine einzige Portion Kaffee zubereitet. Hierzu wird eine mit Kaffee gefüllte, verschlossene Kapsel in eine Kapselaufnahme der Kapselkaffeemaschine eingebracht und die Kapsel in der Kapselaufnahme von einer Nadel an der Oberseite durchstochen, um heisses Wasser in die Kapsel unter Druck einzubringen, wenn eine Tasse Kaffee zubereitet werden soll. Die Kapsel wird auch an der Unterseite von einer Nadel durchstochen, dass das Kaffeegetränk, welches im Inneren der Kapsel zubereitet worden ist, in eine Tasse abgefüllt werden kann. In der Kapsel befindet sich das Kaffeepulver im Inneren eines Filters, dessen Unterseite unversehrt bleiben soll, damit kein Kaffeepulver in die Tasse gelangen kann. Daher befindet sich unter dem Filter in Hohlraum in der Kapsel, der von der Nadel durchstochen werden kann, ohne dass der Filter verletzt wird.

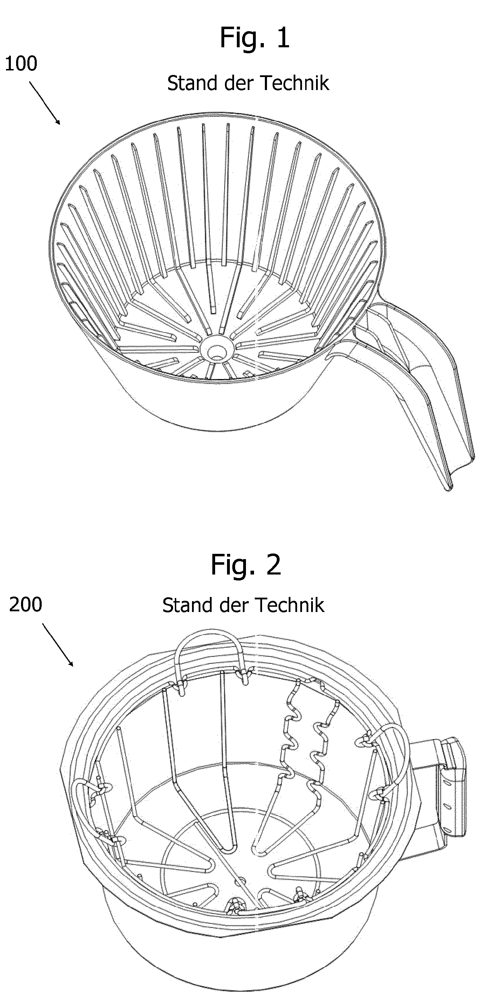

Um Filterkaffee zu brühen, wird ein Kaffeefilter verwendet, welcher einen Halter für ein Filterpapier umfasst, wie beispielsweise im Dokument US 2023/034000 A1 offenbart. Das Filterpaper dient zur Aufnahme eines Kaffeepulvers. Als Halter für das Filterpapier werden bis heute Halter in der Form von mehr oder weniger konischen, nach oben offenen Behältern mit einem Loch im Boden verwendet, in die das Filterpapier eingelegt wird, wie in Fig. 1 dargestellt, wobei das Filterpapier nicht dargestellt ist, um das Loch im Boden zu zeigen. Optional kann zusätzlich gemäss Fig. 2 eine Gitterstruktur in diesen Halter eingebracht werden, wobei die Gitterstruktur den Abstand vom Filterpapier zur Wand des Halters vergrössert, und das Entfernen des Filterpapiers vereinfacht.

Mit Mengenbrühern wird ein Kaffeegetränk für viele Kaffeeportionen zubereitet. Je nach der verwendeten Kaffeemenge und der Kaffeesorte kann dieser Kaffee unterschiedlich stark gebraut werden. Der Kaffee wird manuell auf das Filterpapier aufgebracht. Daher wird der Kaffee nicht exakt dosiert. Wenn zu viel Kaffeepulver verwendet wird, kann dies zur Folge haben, dass das Kaffeegetränk zu stark oder intensiv ausfällt, daher wird beim Brühen mit dem Mengenbrühern oft zusätzliches, kaltes oder warmes Wasser in den gebrühten Kaffee eingebracht. Dieses Wasser wird zumeist mittels eines Schlauchs direkt in das Thermogefäss geleitet oder in den Halter für das Filterpapier zwischen die Wand des Halters und das darin eingelegte Filterpapier. Durch die in Fig. 1 dargestellte Berippung oder die in Fig. 2 dargestellte Gitterstruktur liegt das Filterpapier nicht flächig an der Innenwand des Halters auf. Grundsätzlich kann das zusätzliche Wasser somit durch einen zwischen der Innenwand und dem Filterpapier befindlichen Spalt fliessen. Dabei kann das oft kalte Wasser einerseits das Filterpapier von aussen benetzten und damit die Filterung des Kaffees negativ beeinflussen und andererseits zur ungewollten Abkühlung des Kaffees und des heissen Wassers im Filterpapier führen.

Es ist zwar möglich, dem Kaffeegetränk einen Wasserstrom zuzuführen, der in einem eigenen Kanal geführt wird, was in den Dokumenten US 2022/183498 A1 und US 5 901 634 A gezeigt ist. Der Kanal ist vollständig vom Aufnahmebehälter getrennt und verläuft an der Aussenseite desselben. Um zu vermeiden, dass durch diesen Kanal ungewollt Wasser in den das gebrühte Kaffeegetränk enthaltenden Kaffeebehälter einströmt, ist ein eigenes Ventil und ein eigener Auslass für diesen Kanal im Aufnahmebehälter vorgesehen. Zudem ist eine eigene Zuleitung zum Kanal und eine separate Zuleitung zum Kaffeefilter erforderlich. Ein Auswahlschalter 41 ist vorgesehen, um entweder Wasser oder Kaffeegetränk in den Kaffeebehälter zu füllen. Eine gleichzeitige Befüllung des Kaffeebehälters mit Wasser und Kaffeegetränk ist hingegen ausgeschlossen.

### Aufgabe der Erfindung

Aufgabe der Erfindung ist somit eine Zubereitungsvorrichtung für ein Getränk derart zu verbessern, dass einem Getränk, welches aus einem Schüttgut oder Konzentrat durch Extraktion oder durch Lösung erhältlich ist, jederzeit, insbesondere während des Zubereitungsvorgangs, zusätzliches kaltes oder warmes Wasser zugeführt werden kann, ohne den Zubereitungsvorgang zu beeinträchtigen.

### Beschreibung der Erfindung

Die Lösung der Aufgabe der Erfindung erfolgt durch eine Zubereitungsvorrichtung gemäss Anspruch 1. Vorteilhafte Ausführungsbeispiele der Zubereitungsvorrichtung sind Gegenstand der Ansprüche 2 bis 15.

Wenn der Begriff "beispielsweise" in der nachfolgenden Beschreibung verwendet wird, bezieht sich dieser Begriff auf Ausführungsbeispiele und/oder Ausführungsformen, was nicht notwendigerweise als eine bevorzugtere Anwendung der Lehre der Erfindung zu verstehen ist. **In** ähnlicher Weise sind die Begriffe "vorzugsweise", "bevorzugt" zu verstehen, indem sie sich auf ein Beispiel aus einer Menge von Ausführungsbeispielen und/oder Ausführungsformen beziehen, was nicht notwendigerweise als eine bevorzugte Anwendung der Lehre der Erfindung zu verstehen ist. Dementsprechend können sich die Begriffe "beispielsweise", "vorzugsweise" oder "bevorzugt" auf eine Mehrzahl von Ausführungsbeispielen und/oder Ausführungsformen beziehen.

Die nachfolgende detaillierte Beschreibung enthält verschiedene Ausführungsbeispiele für die erfindungsgemässe Zubereitungsvorrichtung. Die Beschreibung einer bestimmten Zubereitungsvorrichtung ist nur als beispielhaft anzusehen. **In** der Beschreibung und den Ansprüchen werden die Begriffe "enthalten", "umfassen", "aufweisen" als "enthalten, aber nicht beschränkt auf" interpretiert.

Eine Zubereitungsvorrichtung für die Zubereitung eines Getränks, insbesondere eines Heissgetränks, welches mittels eines Mengenbrühers herstellbar ist, umfasst einen Halter für ein Schüttgut. Das Getränk ist aus einem Schüttgut unter Zufuhr von Wasser extrahierbar. Das Schüttgut kann in einem Filterelement aufgenommen sein. Das Filterelement kann sich im Halter befinden. Der Halter enthält ein Haltermantelelement und ein Halterbodenelement. Das Haltermantelelement erstreckt sich vom Halterbodenelement entlang des äusseren Umfangs im Einbauzustand nach oben, wobei das Halterbodenelement eine Halteraustrittsöffnung für das Getränk enthält. Das Haltermantelelement umfasst einen oberen Rand, welcher eine Eintrittsöffnung für das Wasser enthält. Der Halter ist im Einbauzustand in einem Aufnahmebehälter aufgenommen, wobei der Aufnahmebehälter ein Aufnahmebehältermantelelement und ein Aufnahmebehälterbodenelement umfasst. Das Aufnahmebehältermantelelement erstreckt sich vom Aufnahmebehälterbodenelement entlang dessen äusseren Umfangs im Einbauzustand nach oben. Das Aufnahmebehälterbodenelement enthält eine Aufnahmebehälteraustrittsöffnung für das Getränk, wobei der Abstand zwischen dem Aufnahmebehältermantelelement und dem Haltermantelelement in zumindest einem ersten Umfangsabschnitt grösser als in einem zweiten Umfangsabschnitt ist.

Im ersten Umfangsabschnitt ist ein Kanal ausgebildet, der sich vom oberen Rand bis zum Aufnahmebehälterbodenelement erstreckt, wobei der Kanal zum Transport von zusätzlichem Wasser ausgebildet ist, welches durch den Kanal zu der Aufnahmebehälteraustrittsöffnung leitbar ist. Somit kann das zusätzliche Wasser durch den Kanal strömen, während das Wasser, welches auf das Schüttgut auftrifft, zur Zubereitung des Getränks verwendet wird. Das Wasser und das zusätzliche Wasser sind insbesondere durch das Filterelement voneinander getrennt. Da das zusätzliche Wasser durch den Kanal strömt, wird das Filterelement vom zusätzlichen Wasser nicht benetzt. Daher erfolgt insbesondere keine Beeinflussung des Brühvorgangs durch das zusätzliche Wasser. Das durch den Kanal strömende zusätzliche Wasser kommt mit dem Wasser, welches zur Extraktion des Getränks aus dem Schüttgut verwendet wird, nicht in Kontakt. Daher können sich insbesondere die Temperaturen des Wassers und des zusätzlichen Wassers voneinander unterscheiden. Mittels des zusätzlichen Wassers, welches durch den Kanal strömt, können die Temperatur und die Konzentration des ein Extrakt aus dem Schüttgut enthaltenden Getränks gleichzeitig verändert werden. Die Konzentration und die Temperatur des Getränks werden erst im Anschluss and den Brühvorgang verändert, sodass eine Getränkezubereitung mit optimaler Trinktemperatur und von der gewünschten Konzentration aus dem unter optimalen Brühbedingungen gebrauten Getränk erhältlich ist.

Gemäss eines Ausführungsbeispiels enthält das Aufnahmebehältermantelelement eine Ausbuchtung, die sich vom freien Ende des Aufnahmebehältermantelelements bis zum Aufnahmebehälterbodenelement erstreckt, wobei der Kanal durch die Ausbuchtung ausgebildet ist.

Gemäss eines Ausführungsbeispiels enthält das Haltermantelelement eine Einbuchtung, die sich vom freien Ende des Haltermantelelements bis zum Halterbodenelement erstreckt, wobei der Kanal durch die Einbuchtung ausgebildet ist.

Insbesondere ist der im ersten Umfangsabschnitt ausgebildete Kanal zum Transport des zusätzlichen Wassers ausgebildet, welches parallel zu dem durch das Filterelement strömenden Wasser fliesst. Der Kanal ist insbesondere als ein offener Kanal ausgebildet. Mit andern Worten wird von den Kanalwänden kein geschlossener Kanalquerschnitt ausgebildet. Der Kanal verläuft insbesondere in der Ausbuchtung oder Einbuchtung. Somit wird insbesondere durch zumindest einer der Ausbuchtungen oder der Einbuchtungen ein Kanal ausgebildet, der zum Transport des zusätzlichen Wassers ausgebildet ist. Insbesondere kann es sich bei dem zusätzlichen Wasser um warmes oder kaltes Wasser handeln.

Gemäss eines Ausführungsbeispiels ist die Halteraustrittsöffnung relativ zu der Aufnahmebehälteraustrittsöffnung versetzt angeordnet.

Gemäss eines Ausführungsbeispiels zumindest enthält eines der Halterbodenelemente und der Aufnahmebehälterbodenelemente ein Umlenkelement. Beispielsweise ist das Umlenkelement als eine L-förmige oder V-förmige Erhebung ausgebildet. Das Umlenkelement überragt somit die Oberfläche des Halterbodenelements oder des Aufnahmebehälterbodenelements.

Insbesondere ist das Umlenkelement im vom Halterbodenelement und Aufnahmebehälterbodenelement begrenzten Zwischenraum angeordnet. Somit kann durch das Umlenkelement das durch den Kanal in den Zwischenraum einströmende Wasser abgelenkt werden, sodass das Wasser über einen grösseren Teil der Oberfläche des Aufnahmebehälterbodenelements strömen kann, bevor es die Zubereitungsvorrichtung durch die Aufnahmebehälteraustrittsöffnung verlässt. Falls während des Brühvorgangs das Getränk durch das Filterpapier zur Austrittsöffnung des Halterbodenelements fliesst und gleichzeitig kaltes Wasser zusätzlich durch den Kanal fliesst, werden diese beiden Flüsse durch die exzentrische Anordnung der Aufnahmebehälteraustrittsöffnung vermischt.

Das Umlenkelement kann zur besseren Verteilung des Wassers im Zwischenraum beitragen. Das Umlenkelement ist insbesondere als Wirbelgenerator ausgebildet.

Wenn mittels der Zubereitungsvorrichtung ein Heissgetränk zubereitet wird, nimmt die Temperatur des Heissgetränks weniger schnell ab im Vergleich zum vorbekannten Verfahren, mittels welchem die Temperatur des Heissgetränks durch die Zufuhr von kaltem Wasser über einen Schlauch abgesenkt wird. Zudem erfolgt mittels des vorbekannten Verfahrens keine oder nur eine unzureichende Vermischung des Heissgetränks mit dem kalten Wasser, sodass sich im Behälter, beispielsweise einem Thermosgefäss, Schichten mit unterschiedlicher Temperatur ausbilden können.

Wenn das Heissgetränk, welches vom Halterbodenelement durch die Halteraustrittsöffnung in das Aufnahmebehälterbodenelement strömt, wird die maximale Temperaturdifferenz zwischen dem Heissgetränk und der Umgebung verringert und folglich nimmt der Wärmeverlust des vorgekühlten Heissgetränks, welches durch die Aufnahmebehälteraustrittsöffnung in das Thermosgefäss strömt, ab.

Gemäss eines Ausführungsbeispiels weist der Kanal einen Kanalquerschnitt auf, der sich verjüngt. Dies hat zur Folge, dass sich die Strömungsgeschwindigkeit des durch den Kanal strömenden Wassers erhöhen kann, sodass am Umlenkelement eine verstärkte Wirbelbildung erfolgt und somit eine noch intensivere Vermischung des Getränks mit dem Wasser ermöglicht ist.

Gemäss eines Ausführungsbeispiels ist der Aufnahmebehälter zur Aufnahme von Haltern mit Haltermantelelementen ausgebildet, die einen Neigungswinkel zu der Mittenachse einschliessen, der bis einschliesslich 30 Grad betragen kann. Die Mittenachse ist im Einbauzustand in vertikaler Richtung angeordnet. Insbesondere ist der Neigungswinkel grösser als 0 Grad und beträgt maximal 20 Grad. Je grösser der Neigungswinkel ist, den das Haltermantelelement mit der Mittenachse einschliesst, desto geringer wird das vom Halter aufzunehmende Volumen. Durch geeignete Auswahl des Halters kann die Menge an Schüttgut verändert werden, welches zur Zubereitung des Getränks dient. Insbesondere kann die Konzentration des aus dem Schüttgut extrahierten Extrakts variiert werden, sodass je nach Auswahl des Halters Konzentration des Extrakts im Getränk verändert werden kann. Mit anderen Worten kann der Gehalt, d.h. der Anteil an Extrakt im Getränk eingestellt werden. Somit kann die Zubereitungsvorrichtung insbesondere zur Herstellung von Getränken unterschiedlicher Stärke verwendet werden.

Gemäss eines Ausführungsbeispiels kann eine Mehrzahl von Rippen an der Aussenseite des Haltermantelelements angebracht sein, die zur Auflage auf dem Aufnahmebehältermantelelement ausgebildet sind. Die Länge der Rippen ist insbesondere abhängig vom Neigungswinkel, den das Haltermantelelement mit der Mittenachse einschliesst. Je grösser der Neigungswinkel, desto längere Rippen werden vorgesehen, sodass der Halter im Wesentlichen konzentrisch zum Aufnahmeelement angeordnet ist.

Gemäss eines Ausführungsbeispiels sind eine Mehrzahl von Abstandselementen auf der Unterseite des Halterbodenelements angeordnet. Mittels dieser Abstandselemente wird sichergestellt, dass ein Abstand zwischen dem Halterbodenelement und dem Aufnahmebehälterbodenelement bestehen bleibt, in welchem sich das durch den Kanal einströmende Wasser verteilen kann und sich mit dem durch die Austrittsöffnung des Halterbodenelements strömenden Getränks vermischen kann bevor diese Mischung aus Getränk und Wasser die Zubereitungsvorrichtung durch die Austrittsöffnung des Aufnahmebehälterbodenelements verlässt, um beispielsweise in einen Behälter eingefüllt zu werden.

Gemäss eines Ausführungsbeispiels ist der Halter im Aufnahmebehälter aufgenommen, wenn ein Filterelement, beispielsweise ein Filterpapier in den Halter zur Aufnahme eines Schüttguts eingelegt ist. Das Schüttgut kann ein Kaffeepulver umfassen, aus welchem Kaffee extrahiert werden kann. Das Schüttgut kann auch ein Kakaopulver, Milchpulver, Teepulver oder eine Mischung mehrerer der vorgenannten Bestandteile umfassen, welches im heissen Wasser gelöst oder mittels Wasser extrahiert wird. Das Schüttgut kann auch ein anderes Getränk, beispielsweise auf Teebasis umfassen. Hierzu kann in den Halter auch ein Filterelement, das als Siebelement ausgebildet ist, eingebracht werden, welcher Teeblätter oder andere Schüttgüter pflanzlichen Ursprungs (Tee, Kräuter, Gewürze, Fruchtschalen) enthält. Das Schüttgut kann auch ein Präparat zur Herstellung einer Suppe umfassen.

Insbesondere kann die Zubereitungsvorrichtung zur Zubereitung eines Heissgetränks bestimmt sein. Ein Heissgetränk kann beispielsweise Kaffee, Tee, Milch, Kakao umfassen. Unter einem Heissgetränk kann auch ein anderes flüssiges Nahrungsmittel verstanden werden, das durch Zugabe von heissem Wasser zu einem Schüttgut durch Auflösung oder Extraktion erhalten wird, beispielsweise eine Suppe. Ein derartiges flüssiges Nahrungsmittel kann in der Art eines Heissgetränks konsumiert werden.

Die Zubereitungsvorrichtung kann für einen Getränkeapparat verwendet werden. Die Erfindung betrifft daher auch einen Getränkeapparat, enthaltend eine Zubereitungsvorrichtung nach einem der vorhergehenden Ausführungsbeispiele. Der Getränkeapparat kann eine Brühvorrichtung umfassen, wenn mit der Zubereitungsvorrichtung ein Heissgetränk zubereitet werden soll. Die vorgängig beschriebene Zubereitungsvorrichtung kann somit insbesondere für einen Mengenbrüher zur Zubereitung unterschiedlichster Heissgetränke wie Kaffee, Tee und Suppen zum Einsatz kommen. Das Heissgetränk kann geregnet oder gebrüht durch Auflösung eines Schüttguts oder durch Extraktion aus einem Schüttgut erhalten werden. Das Schüttgut befindet sich im Betriebszustand im Halter. Gegebenenfalls kann ein Filterelement vorgesehen sein, welches das Schüttgut enthält.

### Kurzbeschreibung der Zeichnungen

Nachfolgend wird die erfindungsgemässe Zubereitungsvorrichtung anhand einiger Ausführungsbeispiele dargestellt. Es zeigen
Fig. 1 eine Ausführungsform einer vorbekannten Filtervorrichtung,
Fig. 2 eine weitere Ausführungsform einer vorbekannten Filtervorrichtung,
Fig. 3 zwei Varianten einer erfindungsgemässen Zubereitungsvorrichtung in einer perspektivischen Ansicht,
Fig. 4 die Varianten gemäss Fig. 2 in einer weiteren perspektivischen Ansicht,
Fig. 5 die Varianten gemäss Fig. 2 in einer Aufsicht,
Fig. 6 einen Schnitt durch die erste Variante der Zubereitungsvorrichtung gemäss Fig. 3,
Fig. 7 einen Schnitt durch die zweite Variante der Zubereitungsvorrichtung gemäss Fig. 3,
Fig. 8 ein Verwendungsbeispiel für eine Zubereitungsvorrichtung gemäss eines der vorhergehenden Ausführungsbeispiele.

### Detaillierte Beschreibung der Zeichnungen

Fig. 1 zeigt eine vorbekannte Filtervorrichtung 100 in einer ersten Ausführungsform.

Fig. 2 zeigt eine zweite Ausführungsform einer vorbekannten Filtervorrichtung 200.

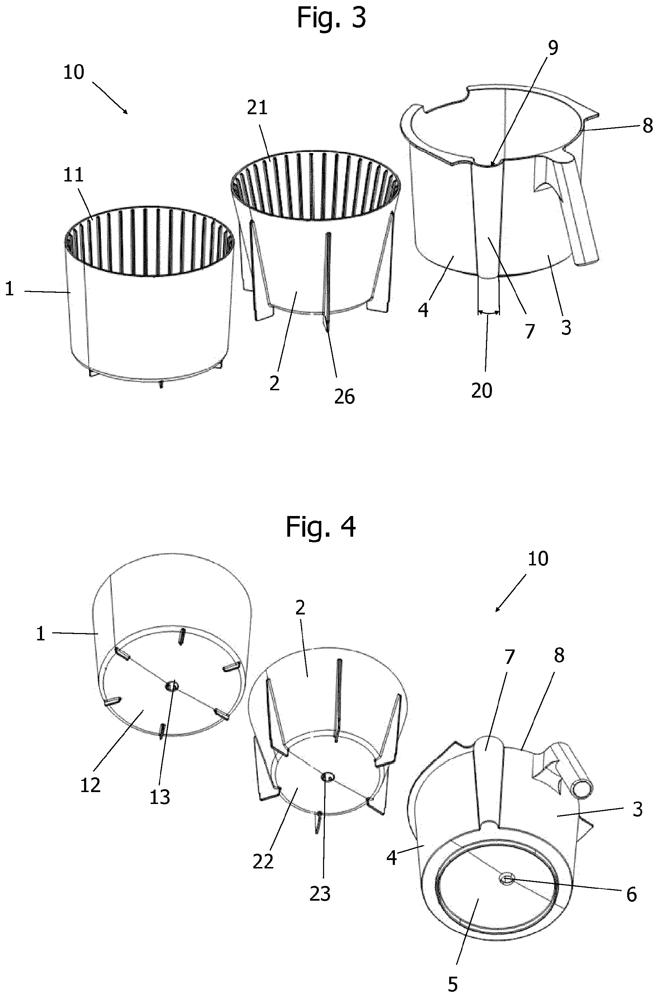

Fig. 3 und Fig. 4 zeigen zwei Varianten einer erfindungsgemässen Zubereitungsvorrichtung 10 in je einer perspektivischen Ansicht. Eine Zubereitungsvorrichtung 10 für die Zubereitung eines Getränks umfasst einen Halter 1, 2 für ein Schüttgut. Aus dem Schüttgut ist unter Zufuhr von Wasser ein Getränk extrahierbar. Das Schüttgut kann in einem Filterelement aufgenommen sein. Der Halter 1, 2 enthält ein Haltermantelelement 11, 21 und ein Halterbodenelement 12, 22. Das Haltermantelelement 11, 21 erstreckt sich vom Halterbodenelement 12, 22 entlang des äusseren Umfangs desselben im Einbauzustand nach oben. Das Haltermantelelement umfasst einen oberen Rand, welcher eine Eintrittsöffnung für das Wasser enthält. Das Halterbodenelement 12, 22 enthält eine Austrittsöffnung 13, 23 für das Getränk. Der Halter 1,2 ist im Einbauzustand in einem Aufnahmebehälter 3 aufgenommen, wobei der Aufnahmebehälter 3 ein Aufnahmebehältermantelelement 4 und ein Aufnahmebehälterbodenelement 5 umfasst. Das Aufnahmebehältermantelelement 4 erstreckt sich vom Aufnahmebehälterbodenelement 5 entlang des äusseren Umfangs im Einbauzustand nach oben. Das Aufnahmebehälterbodenelement 5 enthält eine Aufnahmebehälteraustrittsöffnung 6 für das Getränk, wobei der Abstand zwischen dem Aufnahmebehältermantelelement 3 und dem Haltermantelelement 11, 21 in zumindest einem ersten Umfangsabschnitt 20 grösser als in einem zweiten Umfangsabschnitt 30 ist.

Insbesondere wird durch den ersten Umfangsabschnitt 20 ein Kanal 9 ausgebildet, der zum Transport von zusätzlichem Wasser ausgebildet ist, welches durch den Kanal 9 zu der Aufnahmebehälteraustrittsöffnung 6 leitbar ist.

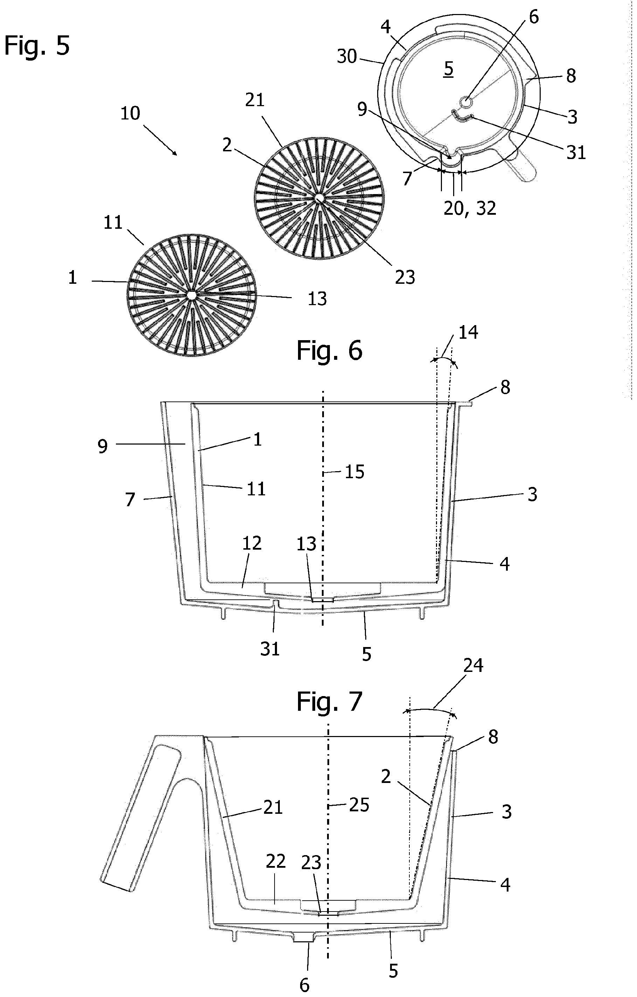

. Der erste Umfangsabschnitt 20 und der zweite Umfangsabschnitt 30 sind am besten in Fig. 5 zu sehen.

Gemäss des vorliegenden Ausführungsbeispiels enthält das Aufnahmebehältermantelelement 4 eine Ausbuchtung 7, die sich vom freien Ende 8 des Aufnahmebehältermantelelements 4 bis zum Aufnahmebehälterbodenelement 5 erstreckt, wobei der Kanal 9 durch die Ausbuchtung ausgebildet ist. Der Kanal 9 kann insbesondere als ein offener Kanal ausgebildet sein.

Gemäss des in Fig. 3 und Fig. 4 dargestellten Ausführungsbeispiels kann eine Mehrzahl von Rippen 26 an der Aussenseite des Haltermantelelements 21 angebracht sein, die zur Auflage im Aufnahmebehälter 3 ausgebildet sind. Insbesondere können die Rippen 26 auf dem Aufnahmebehältermantelelement 4 aufliegen. Die Länge der Rippen 26 ist insbesondere abhängig vom Neigungswinkel 24, den das Haltermantelelement 21 mit der Mittenachse 25 einschliesst, siehe Fig. 7. Je grösser der Neigungswinkel 24 gewählt wird, desto längere Rippen 26 können vorgesehen werden, sodass der Halter 21 im Wesentlichen konzentrisch zum Aufnahmeelement 3 angeordnet werden kann.

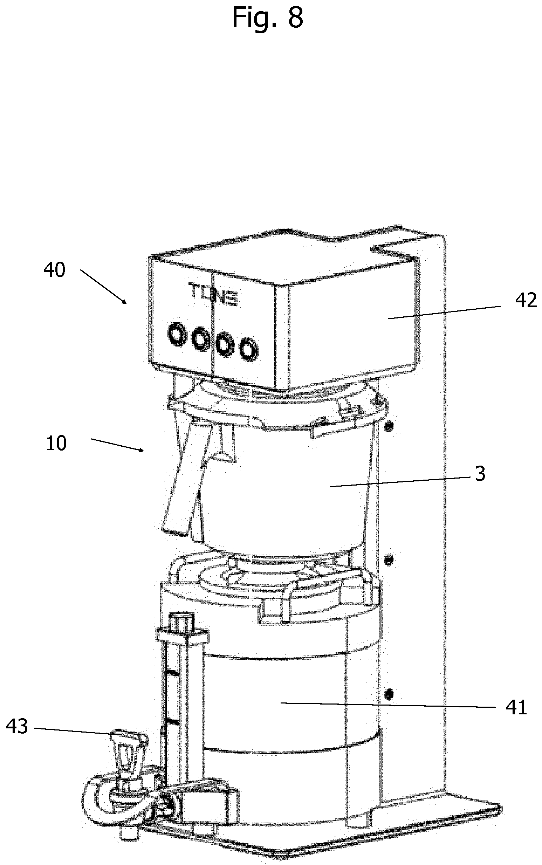

Gemäss des in Fig. 3 und Fig. 4 dargestellten Ausführungsbeispiels ist eine Mehrzahl von Abstandselementen 16 auf der Unterseite des Halterbodenelements 1 angeordnet. Mittels dieser Abstandselemente 16 wird sichergestellt, dass im Einbauzustand ein Zwischenraum zwischen dem Halterbodenelement 12, 22 und dem Aufnahmebehälterbodenelement 5 bestehen bleibt, in welchem sich das durch den Kanal 9 einströmende Wasser verteilen kann und sich mit dem durch die Halteraustrittsöffnung 13, 23 strömenden Getränks vermischen kann, bevor diese Mischung aus Getränk und Wasser die Zubereitungsvorrichtung 10 durch die Aufnahmebehälteraustrittsöffnung 6 verlässt, um beispielsweise in einen Behälter 41 eingefüllt zu werden. Insbesondere kann sich das durch den Kanal 9 einströmende Wasser im Zwischenraum verteilen und sich mit einem durch die Halteraustrittsöffnung 13, 23 strömenden Heissgetränk vermischen, bevor diese Mischung aus Heissgetränk und Wasser die Zubereitungsvorrichtung 10 durch die Aufnahmebehälteraustrittsöffnung 6 verlässt, um beispielsweise in einen als Thermosgefäss ausgebildeten Behälter 41, siehe hierzu auch Fig. 8, eingefüllt zu werden.

Fig. 5 zeigt die Varianten der Zubereitungsvorrichtung gemäss Fig. 2 in einer Aufsicht. Gemäss des vorliegenden Ausführungsbeispiels ist die Halteraustrittsöffnung 13, 23 relativ zu der Aufnahmebehälteraustrittsöffnung 6 versetzt angeordnet, siehe insbesondere den Aufnahmebehälter 3 in Fig. 5 und die Schnittdarstellung in Fig. 7. Gemäss des vorliegenden Ausführungsbeispiels enthält das Aufnahmebehälterbodenelement 5 ein Umlenkelement 31. Beispielsweise ist das Umlenkelement 31 als eine L-förmige oder V-förmige Erhebung ausgebildet. Das Umlenkelement 31 überragt somit die Oberfläche des Aufnahmebehälterbodenelements 5.

Insbesondere ist das Umlenkelement 31 in einem vom Halterbodenelement 11, 21 und vom Aufnahmebehälterbodenelement 5 begrenzten Zwischenraum angeordnet. Somit kann durch das Umlenkelement 31 das vom Kanal 9 in den Zwischenraum einströmende Wasser abgelenkt werden, sodass das Wasser über einen grösseren Teil der Oberfläche des Aufnahmebehälterbodenelements 5 strömen kann, bevor es die Zubereitungsvorrichtung 10 durch Aufnahmebehälteraustrittsöffnung 6 verlässt. Falls während der Zubereitung das Getränk durch das Schüttgut zur Halteraustrittsöffnung 13, 23 fliesst und gleichzeitig kaltes oder warmes Wasser zusätzlich durch den Kanal 9 fliesst, wird das Getränk mit dem kalten oder warmen Wasser durch das die exzentrische Anordnung der Aufnahmebehälteraustrittsöffnung 6 vermischt.

Falls die Zubereitungsvorrichtung für die Zubereitung eines Heissgetränks verwendet wird, fliesst während des Brühvorgangs das Heissgetränk durch das Schüttgut und gegebenenfalls ein das Schüttgut enthaltendes Filterelement zur Halteraustrittsöffnung 13, 23 und gleichzeitig warmes oder kaltes Wasser zusätzlich durch den Kanal 9. Das Filterelement kann beispielsweise als Filterpapier ausgebildet sein oder ein Filterpapier enthalten. Die beiden Flüsse, das heisst in diesem Fall das Heissgetränk und das warme oder kalte Wasser, werden durch die exzentrische Anordnung der Aufnahmebehälteraustrittsöffnung 6 im Aufnahmebehälterbodenelement 5 im Zwischenraum zwischen dem Halterbodenelement 12, 22 und dem Aufnahmebehälterbodenelement 5 vermischt.

Das Umlenkelement 31 kann auch zur besseren Verteilung des Wassers im Zwischenraum dienen. Das Umlenkelement 31 ist insbesondere als Wirbelgenerator ausgebildet.

Wenn ein Heissgetränk, welches vom Halterbodenelement 12, 22 durch die Halteraustrittsöffnung 13, 23 in das Aufnahmebehälterbodenelement 5 strömt, wird die maximale Temperaturdifferenz zwischen dem Heissgetränk und der Umgebung verringert und folglich nimmt der Wärmeverlust des vorgekühlten Heissgetränks, welches durch die Aufnahmebehälteraustrittsöffnung in den Behälter 41, beispielsweise das Thermosgefäss (siehe Fig. 8) strömt, ab.

Gemäss eines nicht dargestellten Ausführungsbeispiels enthält das Haltermantelelement 11, 21 eine Einbuchtung, die sich vom freien Ende des Haltermantelelements bis zum Halterbodenelement erstreckt, wobei der Kanal 9 durch die Einbuchtung ausgebildet sein kann.

Gemäss eines nicht dargestellten Ausführungsbeispiels enthält zumindest eines der Halterbodenelemente 12, 22 ein Umlenkelement. Beispielsweise ist das Umlenkelement als eine L-förmige oder V-förmige Erhebung ausgebildet. Das Umlenkelement überragt somit die Oberfläche des Halterbodenelements.

Gemäss des in Fig. 5 dargestellten Ausführungsbeispiels weist der Kanal 9 einen Kanalquerschnitt 32 auf, der sich verjüngt. Dies hat zur Folge, dass sich die Strömungsgeschwindigkeit des durch den Kanal 9 strömenden Wassers erhöhen kann, sodass am Umlenkelement 31 eine verstärkte Wirbelbildung erfolgt und somit eine noch intensivere Vermischung des Getränks mit dem Wasser ermöglicht ist.

Gemäss Fig. 6 bzw. Fig. 7 ist der Aufnahmebehälter 3 zur Aufnahme von Haltern 1,2 mit Haltermantelelementen 11, 21 ausgebildet, die einen Neigungswinkel 14, 24 mit einer im Einbauzustand vertikal angeordneten Mittenachse 15, 25 einschliessen, der bis einschliesslich 30 Grad betragen kann. Insbesondere ist der Neigungswinkel grösser als 0 Grad und beträgt maximal 20 Grad. Je grösser der Neigungswinkel 14, 24 ist, den das Haltermantelelement 11, 21 einen mit der Mittenachse 15, 25 oder einer dazu parallel verlaufenden Linie einschliesst, desto geringer wird das vom Halter 1,2 aufzunehmende Volumen. Durch geeignete Auswahl des Halters 1,2 kann auch die Menge an Schüttgut verändert werden, welches zur Zubereitung des Getränks dient. Insbesondere kann die Konzentration des aus dem Schüttgut extrahierten Extrakts variiert werden, sodass je nach Auswahl des Halters die Konzentration des Extrakts im Getränk verändert werden kann. Somit kann die erfindungsgemässe Zubereitungsvorrichtung insbesondere zur Herstellung von Getränken unterschiedlicher Stärke verwendet werden.

Fig. 8 zeigt ein Verwendungsbeispiel für eine Zubereitungsvorrichtung 10 gemäss eines der vorhergehenden Ausführungsbeispiele. Fig. 8 zeigt ein Ausführungsbeispiel eines Mengenbrühers 40 für die Verwendung in der Gastronomie insbesondere zur Herstellung von Filterkaffee. Mittels des Mengenbrühers 40 werden grössere Mengen Filterkaffee in der Regel von 1 bis 8 Litern mittels einer Brühvorrichtung 42 gebrüht und in ein Thermosgefäss 41 geführt. Das Thermosgefäss 41 ist mit einer Dosiervorrichtung 43 ausgestattet, damit das Kaffeegetränk später in Portionen abgefüllt werden kann. Anstelle des beispielhaft dargestellten Mengenbrühers 40 kann ein Getränkeapparat vorgesehen sein, der eine Zubereitungsvorrichtung nach einem der vorhergehenden Ausführungsbeispiele enthält.

Für eine Fachperson ist offensichtlich, dass viele weitere Varianten zusätzlich zu den beschriebenen Ausführungsbeispielen möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nicht-ausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind. Wenn die Ansprüche sich auf ein Element oder eine Komponente aus einer Gruppe beziehen, die aus A, B, C bis N Elementen oder Komponenten bestehen kann, soll diese Formulierung derart interpretiert werden, dass nur ein einziges Element dieser Gruppe erforderlich ist, und nicht eine Kombination von A und N, B und N oder irgendeiner anderen Kombination von zwei oder mehr Elementen oder Komponenten dieser Gruppe.

## Patentansprüche

1. Zubereitungsvorrichtung (10) für die Zubereitung eines Getränks, wobei die Zubereitungsvorrichtung (10) als Mengenbrüher ausgebildet ist, mittels welchem das Getränk aus einem Schüttgut unter Zufuhr von Wasser extrahierbar ist, wobei die Zubereitungsvorrichtung einen Halter (1, 2) für das Schüttgut umfasst, wobei der Halter (1, 2) ein Haltermantelelement (11, 21) und ein Halterbodenelement (12, 22) enthält, wobei das Haltermantelelement (11, 21) sich vom Halterbodenelement (12, 22) entlang des äusseren Umfangs im Einbauzustand nach oben erstreckt, wobei das Haltermantelelement einen oberen Rand umfasst, welcher eine Eintrittsöffnung für das Wasser enthält, wobei das Halterbodenelement (12, 22) eine Halteraustrittsöffnung (13, 23) für das Getränk enthält, wobei der Halter (1, 2) im Einbauzustand in einem Aufnahmebehälter (3) aufgenommen ist, wobei der Aufnahmebehälter (3) ein Aufnahmebehältermantelelement (4) und ein Aufnahmebehälterbodenelement (5) umfasst, wobei das Aufnahmebehältermantelelement (4) sich vom Aufnahmebehälterbodenelement (5) entlang des äusseren Umfangs im Einbauzustand nach oben erstreckt, wobei das Aufnahmebehälterbodenelement (5) eine Aufnahmebehälteraustrittsöffnung (6) für das Getränk enthält, **dadurch gekennzeichnet, dass** der Abstand zwischen dem Aufnahmebehältermantelelement (4) und dem Haltermantelelement (11, 21) zumindest in einem ersten Umfangsabschnitt (20) grösser als in einem zweiten Umfangsabschnitt (30) ist, sodass im ersten Umfangsabschnitt (20) ein Kanal (9) ausgebildet ist, der sich vom oberen Rand bis zum Aufnahmebehälterbodenelement (5) erstreckt, wobei der Kanal (9) zum Transport von zusätzlichem Wasser ausgebildet ist, welches durch den Kanal (9) zu der Aufnahmebehälteraustrittsöffnung (6) leitbar ist.

2. Zubereitungsvorrichtung nach Anspruch 1, wobei das Aufnahmebehältermantelelement (4) eine Ausbuchtung (7) enthält, die sich vom freien Ende des Aufnahmebehältermantelelements (4) bis zum Aufnahmebehälterbodenelement (5) erstreckt, wobei der Kanal (9) durch die Ausbuchtung ausgebildet ist.

3. Zubereitungsvorrichtung nach Anspruch 1, wobei das Haltermantelelement (11, 21) eine Einbuchtung enthält, die sich vom freien Ende des Haltermantelelements (11, 21) bis zum Halterbodenelement (12, 22) erstreckt, wobei der Kanal (9) durch die Einbuchtung ausgebildet ist.

4. Zubereitungsvorrichtung nach einem der vorhergehenden Ansprüche, wobei der Kanal (9) als ein offener Kanal ausgebildet ist.

5. Zubereitungsvorrichtung nach Anspruch 4, wobei der Kanal (9) einen Kanalquerschnitt aufweist, der sich verjüngt.

6. Zubereitungsvorrichtung nach einem der vorhergehenden Ansprüche, wobei die Halteraustrittsöffnung (13, 23) relativ zu der Aufnahmebehälteraustrittsöffnung (6) versetzt angeordnet ist.

7. Zubereitungsvorrichtung nach einem der vorhergehenden Ansprüche, wobei zumindest eines der Halterbodenelemente (12, 22) oder das Aufnahmebehälterbodenelement (5) ein Umlenkelement (31) enthält.

8. Zubereitungsvorrichtung nach Anspruch 7, wobei das Umlenkelement (31) als eine L-förmige oder V-förmige Erhebung ausgebildet ist.

9. Zubereitungsvorrichtung nach einem der Ansprüche 7 oder 8, wobei das Umlenkelement (31) in einem vom Halterbodenelement (12, 22) und vom Aufnahmebehälterbodenelement (5) begrenzten Zwischenraum angeordnet ist.

10. Zubereitungsvorrichtung nach einem der vorhergehenden Ansprüche, wobei der Aufnahmebehälter (3) zur Aufnahme von Haltern (1, 2) mit Haltermantelelementen (11, 21) ausgebildet ist, die einen Neigungswinkel (14, 24) mit einer im Einbauzustand vertikal angeordneten Mittenachse (15, 25) einschliessen, wobei der Neigungswinkel (14, 24) in einem Bereich von 0 bis einschliesslich 30 Grad liegen kann.

11. Zubereitungsvorrichtung nach einem der vorhergehenden Ansprüche, wobei eine Mehrzahl von Rippen (26) an der Aussenseite des Haltermantelelements (21) angebracht sind, die zur Auflage im Aufnahmebehälter (3) ausgebildet sind.

12. Zubereitungsvorrichtung nach einem der vorhergehenden Ansprüche, wobei eine Mehrzahl von Abstandselementen (16) auf der Unterseite des Halterbodenelements (12) angeordnet sind.

13. Zubereitungsvorrichtung nach einem der vorhergehenden Ansprüche, wobei eine Mehrzahl von Abstandselementen auf der Oberseite des Aufnahmebehälterbodenelements (5) angeordnet sind.

14. Zubereitungsvorrichtung nach einem der vorhergehenden Ansprüche, wobei der Halter (1, 2) ein Filterelement für ein Schüttgut zur Zubereitung eines Getränks enthält.

15. Getränkeapparat, enthaltend eine Zubereitungsvorrichtung nach einem der vorhergehenden Ansprüche.

## Claims

1. Preparation device (10) for the preparation of a beverage, wherein the preparation device (10) is configured as a bulk brewer, by means of which the beverage can be extracted from a bulk material by adding water, wherein the preparation device comprises a holder (1, 2) for the bulk material, wherein the holder (1, 2) contains a holder shell element (11, 21) and a holder base element (12, 22), wherein the holder shell element (11, 21) extends upward along the outer circumference from the holder base element (12, 22) along the outer circumference in the installed state, wherein the holder shell element comprises an upper edge which contains an inlet opening for the water, wherein the holder base element (12, 22) contains a holder outlet opening (13, 23) for the beverage, wherein the holder (1, 2) is accommodated in a receiving container (3) in the installed state, wherein the receiving container (3) comprises a receiving container shell element (4) and a receiving container base element (5), wherein the receiving container shell element (4) extends upwardly from the receiving container base element (5) along the outer circumference in the installed state, wherein the receiving container base element (5) contains a container outlet opening (6) for the beverage, **characterized in that** the distance between the receiving container shell element (4) and the holder shell element (11, 21) is greater in at least a first circumferential section (20) than in a second circumferential section (30), so that in the first circumferential section (20) a channel (9) is formed which extends from the upper edge to the container base element (5), wherein the channel (9) is configured to transport additional water, which can be conducted through the channel (9) to the container outlet opening (6).

2. The preparation device of claim 1, wherein the receiving container shell element (4) contains a bulge (7) extending from the free end of the receiving container shell element (4) to the receiving container base element (5), wherein the channel (9) is formed by the bulge.

3. The preparation device of claim 1, wherein the holder shell element (11, 21) contains an indentation extending from the free end of the holder shell element (11, 21) to the holder base element (12, 22), wherein the channel (9) is formed by the indentation.

4. The preparation device of one of the preceding claims, wherein the channel (9) is configured as an open channel.

5. The preparation device of claim 4, wherein the channel (9) has a channel cross-section that tapers.

6. The preparation device of one of the preceding claims, wherein the holder outlet opening (13, 23) is offset relative to the receiving container outlet opening (6).

7. The preparation device of one of the preceding claims, wherein at least one of the holder base elements (12, 22) or the receiving container base element (5) contains a deflection element (31).

8. The preparation device of claim 7, wherein the deflection element (31) is configured as an L-shaped or V-shaped elevation.

9. The preparation device of one of claims 7 or 8, wherein the deflection element (31) is arranged in an intermediate space bounded by the holder base element (12, 22) and the receiving container base element (5).

10. The preparation device of one of the preceding claims, wherein the receiving container (3) for receiving the holders (1, 2) is configured with holder shell elements (11, 21) that form an angle of inclination (14, 24) with a centre axis (15, 25) that is arranged vertically in the installed state, wherein the angle of inclination (14, 24) can be in a range from 0 up to and including 30 degrees.

11. The preparation device of one of the preceding claims, wherein a plurality of ribs (26) is attached to the outside of the holder shell element (21), which are configured to rest in the receiving container (3).

12. The preparation device of one of the preceding claims, wherein a plurality of spacer elements (16) is arranged on the underside of the holder base element (12).

13. The preparation device of one of the preceding claims, wherein a plurality of spacer elements is arranged on the upper side of the receiving container base element (5).

14. The preparation device of one of the preceding claims, wherein the holder (1, 2) contains a filter element for a bulk material for preparing a beverage.

15. Beverage apparatus comprising a preparation device according to one of the preceding claims.

## Revendications

1. Dispositif de préparation (10) pour la préparation d'une boisson, dans lequel le dispositif de préparation (10) est configuré comme une cafetière à débit continu, au moyen de laquelle la boisson peut être extraite d'un produit en vrac par ajout d'eau, dans lequel le dispositif de préparation comprend un récipient (1, 2) pour le produit en vrac, dans lequel le récipient (1, 2) comprend un élément de coque de récipient (11, 21) et un élément de base du récipient (12, 22), dans lequel l'élément de coque de récipient (11, 21) s'étend vers le haut le long de la circonférence extérieure à partir de l'élément de base du récipient (12, 22) le long de la circonférence extérieure à l'état installé, dans lequel l'élément de coque du récipient comprend un bord supérieur qui contient une ouverture d'entrée pour l'eau, dans lequel l'élément de base du récipient (12, 22) comprend une ouverture de sortie du récipient (13, 23) pour la boisson, dans lequel le récipient (1, 2) est logé dans un récipient récepteur (3) à l'état installé, dans lequel le récipient récepteur (3) comprend un élément de coque de récipient récepteur (4) et un élément de base de récipient récepteur (5), dans lequel l'élément de coque de récipient récepteur (4) s'étend vers le haut à partir de l'élément de base de récipient récepteur (5) le long de la circonférence extérieure à l'état installé, dans lequel l'élément de base du récipient récepteur (5) contient une ouverture de sortie du récipient récepteur (6) pour la boisson, **caractérisé en ce que** la distance entre l'élément de coque de récipient récepteur (4) et l'élément de coque de récipient (11, 21) est plus grande dans au moins une première section circonférentielle (20) que dans une deuxième section circonférentielle (30), de sorte que dans la première section circonférentielle (20), un canal (9) est formé qui s'étend du bord supérieur à l'élément de base de récipient récepteur (5), le canal (9) étant configuré pour transporter de l'eau supplémentaire, qui peut être acheminée à travers le canal (9) vers l'ouverture de sortie du récipient récepteur (6).

2. Dispositif de préparation selon la revendication 1, dans lequel l'élément de coque de récipient récepteur (4) comprend un renflement (7) s'étendant depuis l'extrémité libre de l'élément de coque de récipient récepteur (4) jusqu'à l'élément de base de récipient de récepteur (5), dans lequel le canal (9) est formé par le renflement.

3. Dispositif de préparation selon la revendication 1, dans lequel l'élément de coque de récipient (11, 21) comporte une indentation s'étendant depuis l'extrémité libre de l'élément de coque de récipient (11, 21) jusqu'à l'élément de base du récipient (12, 22), dans lequel le canal (9) est formé par l'indentation.

4. Dispositif de préparation selon l'une des revendications précédentes, dans lequel le canal (9) est configuré comme un canal ouvert.

5. Dispositif de préparation selon la revendication 4, dans lequel le canal (9) présente une section transversale qui se rétrécit.

6. Dispositif de préparation selon l'une des revendications précédentes, dans lequel l'ouverture de sortie du récipient (13, 23) est décalée par rapport à l'ouverture de sortie du récipient récepteur (6).

7. Dispositif de préparation selon l'une des revendications précédentes, dans lequel au moins l'un des éléments de base du récipient (12, 22) ou l'élément de base de récipient récepteur (5) contient un élément de déviation (31).

8. Dispositif de préparation selon la revendication 7, dans lequel l'élément de déviation (31) est configuré comme une élévation en forme de L ou de V.

9. Dispositif de préparation selon l'une des revendications 7 ou 8, dans lequel l'élément de déviation (31) est disposé dans un espace intermédiaire délimité par l'élément de base du récipient (12, 22) et l'élément de base de récipient récepteur (5).

10. Dispositif de préparation selon l'une des revendications précédentes, dans lequel le récipient récepteur (3) destiné à recevoir les récipients (1, 2) est configuré avec des éléments de coque de récipient (11, 21) qui forment un angle d'inclinaison (14, 24) avec un axe central (15, 25) qui est disposé verticalement à l'état installé, dans lequel l'angle d'inclinaison (14, 24) peut être compris dans une plage de 0 à 30 degrés inclus.

11. Dispositif de préparation selon l'une des revendications précédentes, dans lequel une pluralité de nervures (26) est fixée à l'extérieur de l'élément de coque de récipient (21), lesquelles sont configurées pour reposer dans le récipient récepteur (3).

12. Dispositif de préparation selon l'une des revendications précédentes, dans lequel plusieurs éléments d'écartement (16) sont disposés sur la face inférieure de l'élément de base du récipient (12).

13. Dispositif de préparation selon l'une des revendications précédentes, dans lequel plusieurs éléments d'écartement sont disposés sur la face supérieure de l'élément de base du récipient récepteur (5).

14. Dispositif de préparation selon l'une des revendications précédentes, dans lequel le récipient (1, 2) contient un élément filtrant pour un produit en vrac destiné à la préparation d'une boisson.

15. Dispositif pour boissons comprenant un dispositif de préparation selon l'une des revendications précédentes.
